# EUROPÄISCHE PATENTANMELDUNG

(11) **EP 2 186 556 A1**
(43) Veröffentlichungstag der Anmeldung: **19.05.2010**
(21) Anmeldenummer: 09010099.1
(22) Anmeldetag: 05.08.2009
(51) Int. Cl.: B01D 45/08, B01D 45/10

(54) **Vorrichtung zum Abscheiden von Flüssigkeiten aus Gasströmen sowie Verfahren zur Entfeuchtung und/oder Entstaubung von Gas unter Verwendung wenigstens einer Vorrichtung zum Abscheiden von Flüssigkeiten aus Gasströmen**

(30) Priorität: 13.11.2008 DE 102008057264
(71) Anmelder: RWE Power Aktiengesellschaft, 45128 Essen (DE)
(72) Erfinder: Knickenberg, Bernhard, 59071 Hamm (DE); Madrane, Anis, 40699 Erkrath (DE)
(74) Vertreter: Polypatent

(57) **Zusammenfassung**

Die Erfindung betrifft eine Vorrichtung zum Abscheiden von Flüssigkeiten aus Gasströmen sowie ein Verfahren zur Entfeuchtung und/oder Entstaubung von Gas unter Verwendung wenigstens einer solchen Vorrichtung. Die Vorrichtung ist als Tropfenabscheider (7) für Rauchgasentschwefelungsanlagen ausgebildet und umfasst wenigstens eine Anordnung von Abscheideprofilen in Form von Rollen, Rohren, Stäben, Lamellen oder dergleichen, welche sich in Einbaulage in einem Winkel zu einem Rauchgasstrom erstrecken. Die Vorrichtung zeichnet sich insbesondere dadurch aus, dass wenigstens einige der Abscheideprofile von einem Wärmetauschermedium, beispielsweise von Wasser, durchströmbar sind (Figur 2).

## Beschreibung

Vorrichtung zum Abscheiden von Flüssigkeiten aus Gasströmen sowie Verfahren zur Entfeuchtung und/oder Entstaubung von Gas unter Verwendung wenigstens einer Vorrichtung zum Abscheiden von Flüssigkeiten aus Gasströmen.

Die Erfindung betrifft eine Vorrichtung zum Abscheiden von Flüssigkeiten aus Gasströmen, insbesondere einen Tropfenabscheider für Rauchgasentschwefelungsanlagen, umfassend wenigstens eine Anordnung von Abscheideprofilen in Form von Rollen, Stäben, Lamellen oder dergleichen, welche sich in Einbaulage in einem Winkel zu einem Rauchgasstrom erstrecken.

Die Erfindung betrifft weiter ein Verfahren zur Entfeuchtung und/oder Entstaubung von Rauchgas unter Verwendung wenigstens einer Vorrichtung zum Abscheiden von Flüssigkeiten aus Gasströmen umfassend wenigstens eine Anordnung von Abscheideprofilen, die sich im Gasstrom erstrecken.

Eine Vorrichtung zum Abscheiden von Flüssigkeitstropfen aus Gasströmen ist beispielsweise aus der DE 2005 002 674 U1 bekannt. Diese Vorrichtung ist als vertikaler, mehrstufiger Tropfenabscheider mit drehbaren Stäben und Lamellen als Abscheideprofile ausgebildet. In einer ersten Abscheidestufe sind mehrere parallel zueinander in einer Ebene mit Abstand angeordnete drehbare Stäbe als Abscheideprofile vorgesehen, in zwei weiteren Stufen des Tropfenabscheiders sind als Abscheideprofile sich parallel und mit Abstand zueinander erstreckende Lamellen vorgesehen. Ziel einer solchen Anordnung von verschiedenen Abscheideprofilen in verschiedenen Ebenen bzw. Stufen eines Tropfenabscheiders ist es, einen verhältnismäßig hohen Abscheidegrad bei einfacher und kompakter Bauweise des Tropfenabscheiders zu erzielen. Darüber hinaus soll die Anordnung der Abscheideprofile und die sonstige Konstruktion des Tropfenabscheiders so beschaffen sein, dass eine einfache Reinigung möglich ist.

Üblicherweise werden solche vertikal und horizontal durchströmten Tropfenabscheider in der Abgasreinigung eingesetzt. Tropfenabscheider umfassen beispielsweise ein Gehäuse, in welchem sich die Abscheideprofile in Form von Rollen, Stäben oder Lamellen erstrecken. Dabei werden die Abscheideprofile von dem feuchten Gasstrom umströmt. Durch die Einbauten wird dem Gasstrom eine Strömungsrichtungsänderung und eine Änderung der Strömungsgeschwindigkeit aufgezwungen, sodass die im Gasstrom enthaltenen Tröpfchen gegen die Abscheideprofile prallen und sich dort zu größeren Tropfen akkumulieren. Bei der Abgasreinigung ist der Gasstrom in der Regel auch mit Feststoffen beladen, die sich bei dieser Gelegenheit an den Abscheideprofilen der Tropfenabscheider anlagern. Aus diesem Grund sind die Tropfenabscheider in der Regel konstruktiv im Hinblick auf eine leichte Reinigung optimiert. Darüber hinaus sind häufig auch Mittel zum Abreinigen von Anbackungen während des Betriebes vorgesehen.

Tropfenabscheider der eingangs genannten Art finden beispielsweise auch bei der Rauchgasentschwefelung Anwendung. Das einer Rauchgasentschwefelung zugeführte Rauchgas ist weitestgehend entstaubt. Die Rauchgasentschwefelungsanlage kann einem Elektrofilter nachgeschaltet sein. Hinter dem Elektrofilter gelangt das Rauchgas in den Gaswäscher, in welchem im Gegenzug eine Kalksuspension verrieselt wird (Sprühabsorption). Das aufgrund dessen mit Feuchtigkeit beladene Rauchgas wird stromabwärts einer oder mehrerer Verrieselungsebenen in der Rauchgasentschwefelungsanlage mittels Tropfenabscheidern entfeuchtet. Dabei soll der Anteil der Flüssigkeitstropfen bzw. des Flüssigkeitsnebels in dem Rauchgas weitestgehend reduziert werden.

Bei konventionellen Kohlekraftwerken, in welchen Rauchgasentschwefelungsanlagen heute Anwendung finden, ist, wie vorstehend bereits erwähnt, das Rauchgas bereits vor der Entschwefelung weitestgehend entstaubt, und zwar unter Anwendung bekannter Entstaubungstechniken. Trotzdem ist das Rauchgas nach der Rauchgasentschwefelung teilweise noch staubbeladen. Die von dem Rauchgas mitgeführten Stäube besitzen zwar in der Regel eine Konzentration, die weit unter den gesetzlich geforderten Mindestwerten liegt, diese Stäube können jedoch gegebenenfalls für nachgeschaltete Prozessstufen, wie beispielsweise eine CO₂-Wäsche oder dergleichen schädlich sein.

Der Erfindung liegt daher die Aufgabe zugrunde, eine Vorrichtung der eingangs genannten Art im Hinblick auf die Verringerung des Tropfenauswurfs zu verbessern. Insbesondere soll mit der erfindungsgemäßen Vorrichtung auch eine Staubabscheidung möglich sein.

Weiterhin soll ein verbessertes Verfahren zur Entfeuchtung und/oder Entstaubung von Gas- bzw. Rauchgas bereitgestellt werden.

Die Aufgabe wird zunächst gelöst durch eine Vorrichtung zum Abscheiden von Flüssigkeiten aus Gasströmen, insbesondere durch einen Tropfenabscheider für Rauchgasentschwefelungsanlagen, umfassend wenigstens eine Anordnung von Abscheideprofilen in Form von Rollen, Stäben, Lamellen oder dergleichen, welche sich in Einbaulage in einem Winkel zu einem Gasstrom erstrecken, wobei die Vorrichtung sich dadurch auszeichnet, dass wenigstens einige der Abscheideprofile von einem Wärmetauschermedium durchströmbar sind.

Der Tropfenabscheider gemäß der Erfindung ist selbstverständlich nicht auf die Rauchgasentschwefelung beschränkt, sondern auch zur Entstaubung und Entfeuchtung jedweden Aerosole enthaltenden Gases bis hin zum Einsatz bei der Grubenbewetterung geeignet.

Bei einer besonders bevorzugten Ausführungsform des Tropfenabscheiders gemäß der Erfindung sind zumindest einige der Abscheideprofile mediendurchströmt, so dass an den Abscheideprofilen eine zumindest partielle Abkühlung des Gases und eine Kondensation des Gases stattfindet. Dem liegt die Erkenntnis zugrunde, dass bei Kondensation durch die Tropfenbildung im Gas enthaltene Feststoffe gebunden werden. Die Feststoffe bilden Kondensationskeime, die zur Tropfenbildung bei Abkühlung des Gases führen.

Anders als bei herkömmlichen Tropfenabscheidern werden also über den im Gas bereits enthaltenen Feuchtigkeitsnebel hinaus weitere Tropfen erzeugt, über die schlussendlich eine Entstaubung des Gases bewirkt wird. Ein weiterer damit einhergehender Vorzug der erfindungsgemäßen Vorrichtung ist darin zu sehen, dass beispielsweise bei einer Abgaswäsche bzw. Rauchgasentschwefelungseinrichtung die Verdunstungsverluste minimiert werden.

Bei einer vorteilhaften Variante der Vorrichtung gemäß der Erfindung können die Abscheideprofile jeweils parallel zueinander und beabstandet voneinander in mehreren Abscheidestufen angeordnet sein. Dabei kann beispielsweise eine bewährte Kombination von Rollen- und Lamellenabscheideprofilen Anwendung finden.

Vorteilhafterweise umfasst wenigstens eine Abscheidestufe Abscheideprofile in Form von mediendurchströmten Rohren. Insbesondere Rohre bieten sich aufgrund ihres günstigen Verhältnisses von Querschnittsfläche zu Oberfläche als mediendurchströmte Abscheideprofile an. Bei solchen Rohr- bzw. Rollentropfenabscheidern prallen Tropfen und Partikel aufgrund der zylindrischen Bauform der Abscheideelemente frontal auf. Tropfen werden abgeschieden und Feinsttropfen agglomeriert. Die notwendige Geschwindigkeitserhöhung zwischen den Rollen bzw. Rohren sorgt für die nötige Abscheideenergie. Aufgrund des Temperaturunterschiedes zwischen Rauchgas und Wärmetauschermedium kommt es zur Kondensation an der Rohroberfläche. Die in der Gasphase schwebenden festen Partikel bzw. Aerosole lagern sich an der Oberfläche des Rohres bzw. des Abscheideprofiles nieder. Diese dienen als Kondensationskeime, die dann zu größeren Tropfen agglomerieren und spätestens in einer weiteren Abscheidestufe abgeschieden werden.

Beispielsweise können sich die Abscheideprofile wenigstens einer ersten Abscheidestufe in Einbaulage etwa quer zur Gasströmungsrichtung erstrecken.

Die Vorrichtung gemäß der Erfindung kann weiterhin ein vertikal durchströmtes Gehäuse umfassen, welches wenigstens einige Abscheideprofile in paralleler und voneinander beabstandeter Anordnung aufnimmt. Anstelle eines Gehäuses können auch ein oder mehrere Rahmen vorgesehen sein, innerhalb derer sich die Abscheideprofile erstrecken.

Bei einer zweckmäßigen Ausgestaltung der Vorrichtung gemäß der Erfindung ist vorgesehen, dass wenigstens eine Abscheidestufe Rohre als Abscheideprofile und wenigstens eine weitere Abscheidestufe Lamellen als Abscheideprofile aufweist.

Grundsätzlich ist es auch möglich, dass lamellenförmige Abscheideprofile mit einem Medium durchströmbar ausgebildet sind.

Die Aufgabe wird weiterhin gelöst durch ein Verfahren zur Entfeuchtung und/oder Entstaubung von Gas unter Verwendung wenigstens einer Vorrichtung zum Abscheiden von Flüssigkeiten aus Gasströmen umfassend wenigstens einer Anordnung von Abscheideprofilen, die sich im Gasstrom erstreckt, wobei das Verfahren sich dadurch auszeichnet, dass das Gas in Kontakt mit zumindest einigen der Abscheideprofile zumindest teilweise unter den Taupunkt abgekühlt und kondensiert wird und das Kondensat aus dem Gasstrom ausgeschieden wird. Das Ausscheiden des Kondensats kann in einer einzigen oder ersten Abscheidestufe eines Tropfenabscheiders oder in wenigstens einer weiteren nachgeschalteten zweiten Abscheidestufe eines Tropfenabscheiders erfolgen.

Bei einer Variante des Verfahrens gemäß der Erfindung wird das Rauchgas aus einer Rauchgasentschwefelungsanlage entstaubt. Die Kühlung der Abscheideprofile erfolgt zweckmäßigerweise mit Frischwasser und/oder Prozesswasser aus der Rauchgasentschwefelungsanlage.

Ein Ausführungsbeispiel des Tropfenabscheiders gemäß der Erfindung wird nachstehend anhand der beigefügten Zeichnungen erläutert.

Es zeigen:
Figur 1, eine schematische Schnittansicht durch eine Rauchgasentschwefelungsanlage eines Kohlekraftwerks und
Figur 2, eine perspektivische Ansicht eines Tropfenabscheiders gemäß der Erfindung.

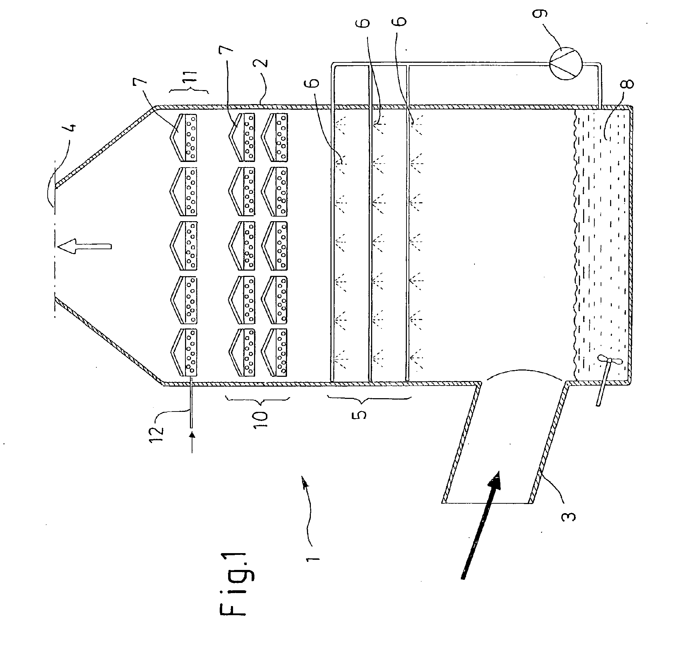

Die in Figur 1 dargestellte Rauchgasentschwefelungsanlage 1 umfasst einen Waschturm 2 mit einem Gaseintritt 3 für das entstaubte Rauchgas, welchem ein nicht dargestelltes Elektrofilter vorgeschaltet ist, und einen Gasaustritt 4. Das gereinigte Rauchgas gelangt über den Gaseintritt 3 in den Waschturm 2 und wird dort im Gegenstrom zu einer eingedüsten Kalksuspension geführt. Die Kalksuspension bzw. Kalkmilch wird in der Düsenebene 5 mittels Sprühdüsen 6 in Schwerkraftrichtung in den Waschturm 2 eingedüst.

Bezogen auf die Strömungsrichtung des Rauchgases befinden sich stromabwärts der Düsenebene mehrere hintereinander geschaltete Tropfenabscheider 7, über welche der mit dem Gasstrom mitgerissene Flüssigkeitsnebel ausgehalten wird. Die an den Tropfenabscheidern 7 zu größeren Tropfen agglomerierten Feinsttropfen fallen schwerkraftbedingt in den mit 8 bezeichneten Sumpf des Waschturms 2, aus welchem die Kalksuspension mittels einer Umwälzpumpe 9 wieder den Sprühdüsen 6 zugeführt wird.

Der Waschturm 2 gemäß Ausführungsbeispiel umfasst aus Richtung des Rauchgases eine erste Tropfenabscheiderebene 10 und eine zweite Tropfenabscheiderebene 11. Diese Tropfenabscheiderebene 10, 11 umfasst mehrere nebeneinander angeordnete Tropfenabscheider 7, die den Querschnitt des Waschturms 2 ausfüllen und beispielsweise auf einer sich über dem Querschnitt des Waschturms 2 erstreckenden Bühne oder einem Einbaurahmen angeordnet sind.

Bei dem beschriebenen Ausführungsbeispiel sind in der ersten Tropfenabscheiderebene jeweils in Gasströmungsrichtung 2 zweistufige Tropfenabscheider 7 übereinander bzw. hintereinander angeordnet, in der zweiten Tropfenabscheiderebne 11 sind bei dem beschriebenen Ausführungsbeispiel mehrere zweistufige Tropfenabscheider 7 angeordnet, die gemäß der Erfindung als Kondensationstropfenabscheider ausgebildet sind. Diese werden, wie nachstehend noch beschrieben wird, über einen Wasseranschluss 12 mit Prozesswasser und/oder Frischwasser beschickt.

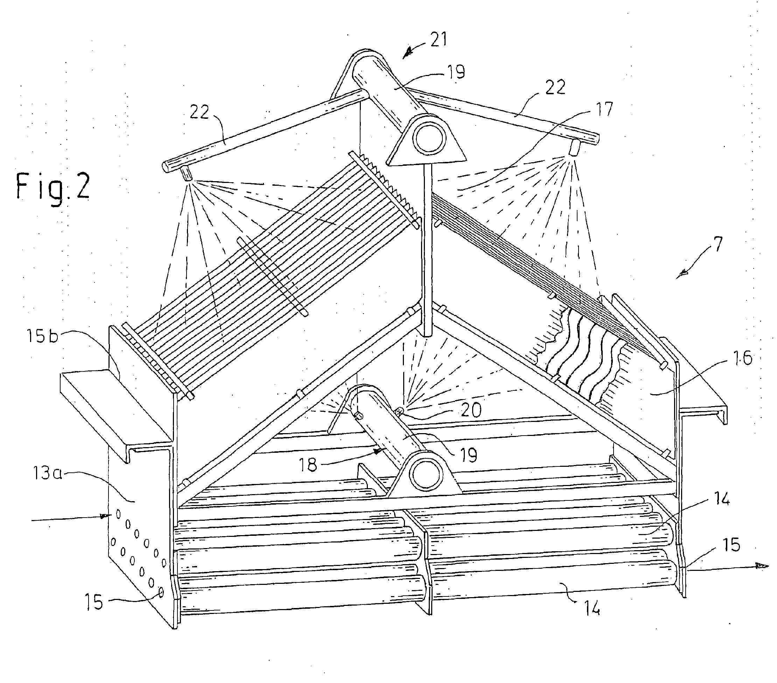

Wie dies insbesondere der Figur 2 zu entnehmen ist, ist der Tropfenabscheider 7 gemäß der Erfindung als zweistufiger vertikaler Tropfenabscheider ausgebildet, und zwar als kombinierter Rollen- oder Rohrabscheider und Lammellentropfenabscheider. Dieser umfasst ein zweiteilig ausgeführtes Gehäuse 13a, 13b mit einem Gehäuseunterteil 13a und einem Gehäuseoberteil 13b. Sowohl das Gehäuseunterteil 13a als auch das Gehäuseoberteil 13b sind im Wesentlichen als im Querschnitt rechteckige, rohrförmige, an den sich parallel zur Gasströmungsrichtung erstreckenden Umfassungswänden geschlossenes Gehäuse ausgebildet. Aus Anschauungszwecken ist bei dem in Figur 2 gezeigten Tropfenabscheider 7 die dem Betrachter zugekehrte Umfassungswand des Gehäuses 13a, 13b entfernt.

Das Gehäuse 13a, 13b definiert einen Teil eines Rauchgaskanals der Rauchgasentschwefelungsanlage 1. Zur Aufhängung in einer nicht dargestellten Bühne des Waschturms 2 ist das Gehäuse 13a, 13b mit einem umlaufenden Flansch 14 versehen, dessen um 90 ° gegen die Rauchgasströmung abgewinkelter Rand eine Einhängung bzw. Arretierung des Tropfenabscheiders 7 ermöglicht.

In dem Gehäuseunterteil 13a erstrecken sich quer zur Durchströmungsrichtung erste Abscheideprofile in Form von Rohren 14, welche, wie vorstehend bereits erwähnt, medien- bzw. wasserdurchströmbar sind. Die Rohre 14 bilden eine erste Abscheidestufe des Tropfenabscheiders 7, wobei mehrere Rohre parallel und mit Abstand zueinander in zwei Lagen angeordnet sind, wobei die in Strömungsrichtung des Rauchgases stromaufwärts angeordnete Lage bzgl. der stromabwärts angeordneten Lage versetzt angeordnet ist, so dass die Rohre 14 der stromabwärts angeordneten Lage jeweils die Spalte zwischen den Rohren 14 der stromaufwärtigen Lage abdecken.

Die Rohre 14 besitzen jeweils einen über ihre Länge konstanten Querschnitt und sind jeweils endseitig mit Wasseranschlüssen bzw. Medienanschlüssen 15 versehen, über welche diese beispielsweise an einen geschlossenen Wasserkreislauf angeschlossen sein können. Über die Wasseranschlüsse 15 kann beispielsweise Prozesswasser und/oder Frischwasser eingespeist werden, dass vorzugsweise eine Temperatur besitzt, die kleiner als die Rauchgastemperatur ist.

Wie vorstehend bereits erwähnt, bilden die als Rohre 14 ausgebildeten Abscheideprofile eine erste Abscheidestufe des Tropfenabscheiders. In Strömungsrichtung hinter der ersten Abscheidestufe sind weitere Abscheideprofile in Form von Lamellen 16 vorgesehen, die jeweils in zwei sich in einem Winkel zueinander erstreckenden, dachartig angeordneten Ebenen angeordnet sind, und zwar jeweils mehrere Lamellen 16 mit Abstand zueinander, wobei die Gesamtquerschnittsfläche des durch den Tropfenabscheider 7 gebildeten Rauchgaskanals mit den Lamellen 16 durchsetzt ist. Die Lamellen haben in bekannter Art und Weise ein etwa S-förmiges Querschnittsprofil. Diese sind jeweils randseitig gegen das Gehäuseoberteil und eine firstartige Traverse 17 abgestützt. In dem Zwischenraum zwischen der ersten Tropfenabscheidestufe und der zweiten Tropfenabscheidestufe ist eine erste Bedüsungseinrichtung 18 in Form einer sich quer zu den Rohren 14 erstreckenden Bedüsungsleitung 19 mit Sprühdüsen 20 vorgesehen. Die Bedüsungsleitung 19 kann mit den Rohren 14 an den gleichen Wasserkreislauf angeschlossen sein. Gleiches trifft auch auf die mit 21 bezeichnete zweite Bedüsungseinrichtung zu, die in Strömungsrichtung hinter der zweiten Tropfenabscheidestufe so angeordnet ist, dass die auf Auslegern 22 angeordneten Sprühdüsen 20 mit dem jeweils erzeugten Sprühkegel alle Zwischenräume zwischen den Lamellen 16 bestreichen und somit eine gründliche Abreinigung der sich etwa zwischen und an den Lamellen 16 absetzenden Feststoffe ermöglichen.

Bei dem Verfahren gemäß der Erfindung gelangt das bereits in einem Elektrofilter oder dergleichen entstaubte Rauchgas mit einer Feststoffbeladung von weniger als 10mg/m³ über den Gaseintritt 6 in den Waschturm 2. Dort herrscht beispielsweise eine Gasströmungsgeschwindigkeit von etwas 4 m/s vor. Im Gegenstrom zu dem Rauchgas wird über die Sprühdüsen 6 eine Kalksuspension eingedüst. Hinter den mit 5 bezeichneten Düsenebenen des Waschturms 2 wird das feuchtigkeitsbeladene Rauchgas zunächst durch die erste Tropfenabscheiderebene 10 hindurchgeführt. Dort sind, wie eingangs bereits erwähnt, jeweils zwei zweistufige vertikale Tropfenabscheider 7 hintereinander geschaltet. Diese Tropfenabscheider 7 können als Tropfenabscheider konventioneller Bauart ausgeführt sein. Bei dem beschriebenen Ausführungsbeispiel sind diese beispielsweise als kombinierte Rollen/Lamellentropfenabscheider ausgebildet. Der ersten Tropfenabscheiderebene 10 ist eine zweite Tropfenabscheiderebene 11 nachgeschaltet, die jeweils Tropfenabscheider 7 gemäß der in Figur 2 dargestellten Ausführungsform umfasst. In einer ersten Tropfenabscheiderstufe der Tropfenabscheider 7 wird das Rauchgas an den wasserdurchströmten Rohren 14 partiell unter den Taupunkt abgekühlt. Die noch im Abgasstrom enthaltenen Feststoffe bilden dabei Kondensationskeime zur weiteren Kondensation des Abgases, die zunächst Feinsttropfen bilden und an den Rohren 14 zu größeren Tropfen agglomerieren. Diese Tropfen werden dabei entweder bereits an den Rohren 14 oder spätestens an den nachgeschalteten Lamellen 16 abgeschieden und aus dem Abgasstrom ausgehalten.

### Bezugszeichenliste

- 1: Rauchgasentschwefelungsanlage
- 2: Waschturm
- 3: Gaseintritt
- 4: Gasaustritt
- 5: Düsenebene
- 6: Sprühdüsen
- 7: Tropfenabscheider
- 8: Sumpf
- 9: Umwälzpumpe
- 10: erste Tropfenabscheiderebene
- 11: zweite Tropfenabscheiderebene
- 12: Wasseranschluss
- 13a: Gehäuseunterteil
- 13b: Gehäuseoberteil
- 14: Rohre
- 15: Wasseranschlüsse
- 16: Lamellen
- 17: Traverse
- 18: erste Bedüsungseinrichtung
- 19: Bedüsungsleitung
- 20: Sprühdüsen
- 21: zweite Bedüsungseinrichtung
- 22: Ausleger

## Patentansprüche

1. Vorrichtung zum Abscheiden von Flüssigkeiten aus Gasströmen, insbesondere Tropfenabscheider (7) für Rauchgasentschwefelungsanlagen, umfassend wenigstens eine Anordnung von Abscheideprofilen in Form von Rollen, Rohren, Stäben, Lamellen oder dergleichen, welche sich in Einbaulage in einem Winkel zu einem Gasstrom erstrecken, **dadurch gekennzeichnet, dass** wenigstens einige der Abscheideprofile von einem Wärmetauschermedium durchströmbar sind.

2. Vorrichtung nach Anspruch 1, **dadurch gekennzeichnet, dass** zumindest einige der Abscheideprofile mediendurchströmt sind.

3. Vorrichtung nach einem der Ansprüche 1 oder 2, **dadurch gekennzeichnet, dass** die Abscheideprofile jeweils parallel zueinander und beabstandet voneinander in mehreren Abscheidestufen angeordnet sind.

4. Vorrichtung nach einem der Ansprüche 1 bis 3, **dadurch gekennzeichnet, dass** wenigstens eine Abscheidestufe Abscheideprofile in Form von mediendurchströmten Rohren (14) umfasst.

5. Vorrichtung nach Anspruch 4, **dadurch gekennzeichnet, dass** die bezogen auf die Gasströmung erste Abscheidestufe mediendurchströmte Rohre (14) als Abscheideprofile umfasst.

6. Vorrichtung nach einem der Ansprüche 1 bis 5, **dadurch gekennzeichnet, dass** sich die Abscheideprofile wenigstens einer ersten Abscheidestufe in Einbaulage etwa quer zur Gasströmungsrichtung erstrecken.

7. Vorrichtung nach einem der Ansprüche 1 bis 6, **gekennzeichnet durch** ein vertikal durchströmtes Gehäuse (13a, b) welches wenigstens einige Abscheideprofile in paralleler und voneinander beabstandeter Anordnung aufnimmt.

8. Vorrichtung nach einem der Ansprüche 1 bis 7, **dadurch gekennzeichnet, dass** wenigstens eine Abscheidestufe Rohre (14) als Abscheideprofile und wenigstens eine weitere Abscheidestufe Lamellen (16) als Abscheideprofile aufweist.

9. Verfahren zur Entfeuchtung und/oder Entstaubung von Gas unter Verwendung wenigstens einer Vorrichtung zum Abscheiden von Flüssigkeiten aus Gasströmen, umfassend wenigstens eine Anordnung von Abscheideprofilen, die sich im Gasstrom erstrecken, **dadurch gekennzeichnet, dass** das Gas im Kontakt mit zumindest einigen der Abscheideprofilen zumindest teilweise unter den Taupunkt abgekühlt und kondensiert wird und dass das Kondensat aus dem Gasstrom ausgeschieden wird.

10. Verfahren nach Anspruch 8, **dadurch gekennzeichnet, dass** das Gas in einer ersten Abscheidestufe eines Tropfenabscheiders mit Abscheideprofilen abgekühlt und kondensiert und in wenigstens einer weiteren nachgeschalteten Abscheidestufe weiter entfeuchtet wird.

11. Verfahren nach einem der Ansprüche 8 oder 9, bei welchem Rauchgas aus einer Rauchgasentschwefelungsanlage entstaubt wird.

12. Verfahren nach einem der Ansprüche 8 bis 10, **dadurch gekennzeichnet, dass** die Abscheideprofile zumindest teilweise mit Frischwasser und/oder Prozesswasser gekühlt werden.
